Europäisches Patentamt

European Patent Office

Office européen des brevets

(19)

(11) Veröffentlichungsnummer: **0 020 924**
**B1**

(12) **EUROPÄISCHE PATENTSCHRIFT**

(45) Veröffentlichungstag der Patentschrift:
**12.05.82**

(51) Int. Cl.³: **C 08 C 19/10**

(21) Anmeldenummer: **80102210.4**

(22) Anmeldetag: **24.04.80**

(54) **Verfahren zur Isomerisierung von isolierten zu konjugierten Doppelbindungen in Homo- und/oder Copolymeren von 1,3-Dienen.**

(30) Priorität: **19.06.79 DE 2924548**

(43) Veröffentlichungstag der Anmeldung:
**07.01.81 Patentblatt 81/1**

(45) Bekanntmachung des Hinweises auf die Patenterteilung:
**12.05.82 Patentblatt 82/19**

(84) Benannte Vertragsstaaten:
**AT BE FR GB IT SE**

(56) Entgegenhaltungen:
**keine**

(73) Patentinhaber: **CHEMISCHE WERKE HÜLS AG,
Postfach 1320, D-4370 Marl 1 (DE)**

(72) Erfinder: **Kampf, Wolfgang, Dr., Im.Wienäckern 60 b,
D-4358 Haltern (DE)**

BUNDESDRUCKEREI BERLIN

Verfahren zur Isomerisierung von isolierten zu konjugierten Doppelbindungen in
Homo- und/oder Copolymeren von 1,3-Dienen

Bei der Homopolymerisation von 1,3-Dienen sowie bei deren Copolymerisation untereinander oder mit vinylsubstituierten Aromaten erhält man Polymere mit isolierten Doppelbindungen.

Es ist jedoch bekannt, daß nieder- und hochmolekulare Verbindungen mit konjugierten Doppelbindungen den entsprechenden Verbindungen mit isolierten Doppelbindungen an Reaktivität und damit auch an Attraktivität überlegen sind. Aus diesem Grunde wurden bereits Verfahren zur Herstellung von Verbindungen mit konjugierten Doppelbindungen entwickelt. Man kann dabei z. B. so vorgehen, daß man 1,3-Diene mit Acetylen copolymerisiert [J. Furukawa et al., Journ. Polym. Sci., Polym. Chem. Ed., Vol. 14, 1213—19 (1976)]. Eine andere und wirtschaftlichere Möglichkeit ist die Isomerisierung von isolierten zu konjugierten Doppelbindungen. Zur Durchführung dieser Isomerisierung wurden die unterschiedlichsten Katalysatorsysteme eingesetzt.

So ist aus der DE-AS 1 174 071 ein Verfahren zur Isomerisierung von Butadienpolymerisaten bekannt, bei dem man die Butadienpolymerisate in Gegenwart geringer Mengen von Übergangsmetallen der VI. bis VIII. Gruppe des Periodischen Systems der Elemente und bzw. oder von Verbindungen, in denen diese Metalle im nullwertigen Zustand vorliegen, auf Temperaturen zwischen 100 und 300° C erhitzt.

Die Nachteile dieses Verfahrens bestehen darin, daß einmal die Isomerisierungstemperatur sehr hoch ist und dabei Gelierung eintreten kann; zum anderen findet mit den relativ teuren Katalysatoren cis-trans-Isomerisierung statt, die zum Verlust an reaktiven cis-1,4-Strukturen führt.

Weiterhin ist gemäß dem Verfahren der DE-OS 2 342 885 die Kombination aus einer organischen Alkalimetallverbindung und einem speziellen Diamin als Isomerisierungskatalysator für niedermolekulare Homo- und Copolymere des Butadiens einsetzbar. Der chelatisierende Effekt der eingesetzten Diamine bedingt jedoch einen relativ hohen Gehalt an Alkalimetallionen im Polymeren, der sich beispielsweise bei dessen Einsatz im Lacksektor negativ auswirkt. Außerdem ergibt die als bevorzugt beschriebene Kombination von Polymerisation und Isomerisierung nicht den für die Trocknungseigenschaften von niedermolekularen Polybutadien vorteilhaften hohen Gehalt an 1,4-Strukturen.

Aufgabe der Erfindung war es, ein Verfahren zur Isomerisierung von isolierten zu konjugierten Doppelbindungen in Homo- und/oder Copolymeren von 1,3-Dienen zu entwickeln, bei dem im allgemeinen unter Erhalt anwendungstechnisch wertvoller cis-1,4-Strukturen keine Gelierung auftritt, und das Produkte mit niedrigem Gehalt an Alkalimetallionen ergibt.

Diese Aufgabe wurde dadurch gelöst, daß man die Isomerisierung mit einem Katalysatorsystem bestehend aus

a)   einer alkali- und/oder erdalkalimetallorganischen Verbindung und/oder einem Alkalihydrid und
b)   Hexamethylphosphorsäuretriamid (HMPT)

durchführt.

Dies ist insofern überraschend, weil andere einzähnige Liganden, wie z. B. Triethylamin und Pyridin, nach den Vergleichsbeispielen 2 bis 4 in der Tabelle 1 der DE-OS 2 342 885 keinen isomerisierenden Effekt bringen.

Die Wirkung von HMPT-Zusätzen bei der Isomerisierung von Doppelbindungen ist weiterhin deshalb überraschend, weil andere Sauerstoff-Donatoren wie Diglyme, Hexaglykol-di-n-butylether oder sogar der Kronenether 18-crown-6 (hierbei wurde $K_2CO_3$ als Base eingesetzt) keine Konjuenstrukturen im Polymeren ergeben, wenn man ähnliche Versuchsbedingungen wie im Falle des erfindungsgemäßen Katalysatorsystems wählt.

Unter Homo- und Copolymeren von 1,3-Dienen werden im Rahmen dieser Erfindung verstanden: Homopolymerisate von z. B. Butadien-(1,3), Isopren, 2,3-Dimethylbutadien und Piperylen, Copolymerisate dieser 1,3-Diene untereinander sowie Copolymerisate dieser 1,3-Diene mit vinylsubstituierten aromatischen Verbindungen, wie z. B. Styrol, $\alpha$-Methylstyrol, Vinyltoluol und Divinylbenzol. Der Gehalt an vinylsubstituierten aromatischen Verbindungen in den Copolymerisaten soll 50 Molprozent nicht überschreiten. Bevorzugt werden bei dem erfindungsgemäßen Verfahren Polybutadiene mit Molekulargewichten ($\overline{M}n$) von 500 bis 20 000, besonders 600 bis 10 000 und ganz besonders 800 bis 6000 eingesetzt. Die Mikrostruktur der Diene in den Homo- bzw. Copolymeren ist im allgemeinen nicht kritisch, jedoch ist es vorteilhaft, wenn mindestens 20% der Doppelbindungen cis-1,4-Struktur besitzen.

Das beim erfindungsgemäßen Verfahren einsetzbare Katalysatorsystem besteht a) aus einer alkaliund/oder erdalkalimetallorganischen Verbindung und/oder einem Alkalihydrid und b) Hexamethylphosphorsäuretriamid.

Die als Katalysatorkomponente a) zu verwendende organische Alkali- oder Erdalkalimetallverbindung ist eine solche, worin das Metall Lithium, Natrium, Kalium oder Magnesium, vorzugsweise Lithium und Natrium, ist, und der organische Rest für eine Alkylgruppe, wie z. B. Methyl, Ethyl, Propyl, Butyl und Pentyl, eine Alkenylgruppe, wie z. B. Allyl und Methallyl, eine Cycloalkylgruppe, wie z. B. Cyclopentyl und Cyclohexyl, oder eine Aryl- oder Aralkylgruppe, wie z. B. Phenyl und Benzyl, mit vorzugsweise 1 bis 20 Kohlenstoffatomen, steht. Anstatt der metallorganischen Verbindung kann auch ein Alkali- oder Erdalkalihydrid verwendet werden, wobei NaH bevorzugt wird.

Ferner lassen sich Komplexe einer aromatischen mehrkernigen Verbindung, wie Naphthalin und Anthracen mit Natrium oder Kalium, als Komponente a) verwenden. Die vorstehenden Verbindungen können einzeln oder in Form von Gemischen aus zwei oder mehr von ihnen verwendet werden.

Die Katalysatorkomponente b), Hexamethylphosphorsäuretriamid, ist eine gängige Verbindung des Handels, deren Herstellung, Struktur und Eigenschaften von H. Normant in Angew. Chem., 79 (1967), 1029—1050, beschrieben sind.

Das molare Verhältnis der Katalysatorkomponenten b) : a) kann innerhalb eines weiten Bereiches schwanken. Im allgemeinen liegt es in dem Bereich von 0,5 bis 50, vorzugsweise im Bereich von 1 bis 10, d. h. im Vorzugsbereich arbeitet man mit äquimolaren Mengen bis zum 10fachen Überschuß der Katalysatorkomponente b).

Die Katalysatorkomponente a) wird im allgemeinen dem zu isomerisierenden Polymeren in einer Menge von 0,5 mMol bis 100 mMol, vorzugsweise 1 bis 40 mMol, pro 100 g Polymer zugesetzt.

Das zu isomerisierende Polymere kann sowohl mit als auch ohne Lösemittel eingesetzt werden. Der Einsatz eines Lösemittels ist dann angebracht bzw. erforderlich, wenn die Viskosität des Polymeren so hoch ist, daß die homogene Verteilung der Katalysatorkomponenten nicht gewährleistet ist.

Als Lösemittel, die frei von störenden Verunreinigungen, wie z. B. Sauerstoff und Wasser, sein sollen, kommen z. B. aliphatische, cycloaliphatische und aromatische Kohlenwasserstoffe in Frage Typische Vertreter aus diesen Gruppen sind Hexan, Octan, Cyclohexan, Benzol und Toluol.

Das erfindungsgemäße Verfahren wird im allgemeinen bei Temperaturen von 0 bis +200°C durchgeführt. Bevorzugt ist der Bereich von +20 bis +100°C.

Bei der Durchführung des erfindungsgemäßen Verfahrens geht man im allgemeinen so vor, daß man das zu isomerisierende Polymer, gegebenenfalls gelöst in einem Lösemittel, mit HMPT vorlegt, auf die gewünschte Temperatur erwärmt und unter Rühren eine ca. 20 gewichtsprozentige Lösung der Katalysatorkomponente a), sofern diese in einem organischen Lösemittel löslich ist, zutropft. Ist die Katalysatorkomponente a) schlecht löslich, wie z. B. im Falle des Amylnatriums, so wird das gegebenenfalls in einem Lösemittel gelöste Polymere unter Rühren zu der vorgelegten Mischung der Katalysatorkomponenten a) und b) gegeben. Die erforderliche Reaktionszeit richtet sich nach Art und Menge der Katalysatorkomponente a), nach dem Verhältnis von b) : a), nach dem zu isomerisierenden Polymeren und nach der Temperatur. Die optimale Reaktionszeit läßt sich durch einige orientierende Versuche leicht ermitteln. Bis zu diesem Verfahrensschritt werden alle Operationen unter Schutzgasatmosphäre, vorzugsweise unter Argon, durchgeführt. Die Reaktion wird durch Zugabe einer H-aciden Verbindung, wie z. B. Methanol oder Isopropanol, beendet. Anschließend wird der Katalysator durch wäßrige Wäsche und/oder eine adsorptive Behandlung, z. B. mit Bleicherde, weitestgehend entfernt.

Die nach dem erfindungsgemäßen Verfahren isomerisierten Homo- und/oder Copolymeren von 1,3-Dienen, die bevorzugt zur Herstellung von Überzugsmitteln Verwendung finden, haben bis zu 35%, bezogen auf die Gesamtzahl der Doppelbindungen, konjugierte Dienstrukturen. Daneben treten auch in geringem Maße konjugierte Tri- und Tetraen-Strukturen auf.

Das erfindungsgemäße Verfahren wird durch die nachfolgenden Beispiele näher erläutert.

Die darin angegebenen Konjuengehalte wurden UV-spektroskopisch ermittelt und sind im Falle der Polybutadiene als Gewichtsprozente, berechnet für $C_8H_{14}$ (konjugierte Diene), $C_8H_{12}$ (konjugierte Triene) und $C_8H_{12}$ (konjugierte Tetraene), angegeben. Raumtemperatur bedeutet in allen Beispielen 25°C. Das Verhältnis Metall/Kette stellt jeweils das Molverhältnis von Metall zum Polymeren dar.

Alle Prozentangaben sind — sofern nicht anders angegeben — Gewichtsprozente.

Die Mikrostrukturen wurden IR-spektroskopisch bestimmt und stellen die anteilsmäßigen Werte der Doppelbindungen dar.

Beispiel 1

200 g eines Polybutadienöls mit 76% cis-1,4-Struktur und einem Gehalt an konjugierten Dienstrukturen von <0,5% ($\overline{M}_n$=1500) wurden in einem ausgeheizten und mit Argon gespülten Rührkolben vorgelegt. Dazu wurden aus einer Pipette 6,2 ml Hexamethylphosphorsäuretriamid (HMPT) und 3,4 ml 2 m Lithiumbutyl-(LiBu)-Lösung in Hexan (≙0,05 Li/Kette; HMPT : Li=6,25 : 1) gegeben. Dabei bildete sich augenblicklich eine dunkelrote Färbung aus. Das Gemisch wurde unter Rühren auf 80°C aufgeheizt, wobei eine weitere Farbvertiefung eintrat. Alle Reaktionen erfolgen unter Argonatmosphäre. Nach verschiedenen Zeiten wurden mittels einer Pipette Proben entnommen, mit Methanol versetzt, wobei die Proben eine gelbe Farbe annahmen, und im Ölpumpenvakuum bei 120°C 30 Minuten von flüchtigen Bestandteilen wie Methanol befreit. Die Entwicklung der Mikrostrukturen und des Konjuengehaltes mit der Zeit bei diesem Versuch enthält Tabelle 1.

3

0 020 924

Tabelle 1

Zeitliche Abhängigkeit der Isomerisierung mit LiBu/HMPT

| Zeit | Mikrostruktur [%] | | | Konjuengehalt [%] | | |
|------|---------|-----|---------|---------|---------|-----------|
| [Min] | trans-1.4 | 1.2 | cis-1.4 | Diolef. | Triolef. | Tetraolef. |
| 30 | 23 | 1 | 76 | 9.9 | 0.15 | 0.03 |
| 60 | 23 | 1 | 76 | 10.0 | 0 | 0.04 |
| 180 | 24 | 1 | 75 | 31.5 | 0 | 0 |
| 300 | 22 | 1 | 77 | 17.8 | 0 | 0 |

Die wiedergegebenen Mikrostrukturen stellen die Relativwerte (auf 100% umgerechnet) dar. Die Absolutgehalte liegen zwischen 80 und 85%.

Das Produkt wurde in einer Schichtstärke von 50 μm (naß) auf ein Blech gebracht und in Anlehnung an DIN 53 150 hinsichtlich des Trocknungsverhaltens untersucht. Es ergaben sich Staub- und Durchtrocknungszeiten von <1 Stunde (Vergleich: Ausgangsmaterial : Staub- und Durchtrocknung: 9 Stunden).

Beispiel 2

Durch Reaktion von Na-Staub (3,41 g; 45%ig in Paraffin; mit Hexan ausgewaschen) in 187,5 ml Cyclohexan mit 4,75 ml Amylchlorid, das innerhalb von 2 Min. bei −10°C zugetropft wurde, bildete sich Natriumamyl. Zur Vervollständigung der Reaktion wurde das Reaktionsgemisch eine halbe Stunde bei −10°C gerührt. Danach ließ man die Temperatur bis +20°C steigen. Dann wurden 100 g eines Polybutadienöles mit den gleichen Kenndaten wie in Beispiel 1 zugegeben. Nach dem Zupipettieren von 14,6 ml HMPT erfolgte ein Farbumschlag von dunkelgraublau nach braun. Im weiteren Verlauf der Reaktion wurde das Gemisch ockerfarben. Nach Beendigung der Reaktion durch Zugabe von 2 ml Methanol/Probe wurden die flüchtigen Bestandteile bei 130°C im Ölpumpenvakuum innerhalb von 2 Stunden abgezogen. Die zeitliche Entwicklung von Konjuengehalten und Mikrostrukturen enthält Tabelle 2.

Tabelle 2

Zeitliche Abhängigkeit der Isomerisierung mit Na-amyl/HMPT

| Zeit | Mikrostruktur [%] | | | Konjuengehalt [%] | | |
|------|---------|-----|---------|---------|---------|-----------|
| [Min] | trans-1.4 | 1.2 | cis-1.4 | Diolef. | Triolef. | Tetraolef. |
| 30 | 23 | 1 | 76 | 13.3 | 0.19 | 0.07 |
| 60 | 22 | 1 | 77 | 12.7 | 0.11 | 0.05 |
| 180 | 21 | 1 | 78 | 11.3 | − | − |
| 300 | 19 | 1 | 80 | 8.6 | − | − |

Beispiele 3 und 4

Das Beispiel 2 wurde bei 50°C und 80°C wiederholt, wobei nach Zugabe aller Komponenten (Polybutadienöl und HMPT) bei Raumtemperatur auf die gewünschte Temperatur eingestellt wurde.

4

Tabelle 3

| | T | Konjuengehalt [%] | | |
|---|---|---|---|---|
| | [°C] | Diolef. | Triolef. | Tetraolef. |
| Beispiel 3 | 50 | 12.8 | 0.19 | 0.05 |
| Beispiel 4 | 80 | 12.4 | 0.28 | – |

Die Mikrostrukturen entsprachen denen von Beispiel 2. Die in den Beispielen 3 und 4 angegebenen Werte entsprechen Proben, die nach 3 Stunden entnommen wurden, wobei zu bemerken ist, daß die Konjuengehalte bei 50°C zwischen 30 Min. und 5 Stunden praktisch konstant sind, während nach 3 Stunden bei 80°C ein Abfall der Konjuengehalte auf 5% festzustellen war.

## Beispiel 5

In bekannter Weise wurde in Diethylether aus Ethylbromid und Magnesiumspänen eine Grignardverbindung EtMgBr hergestellt und nach dem Abtreiben des Ethers in Mengen von 5 Gewichtsprozent ($\triangleq$ 0,564 Mg/Kette), bezogen auf eingesetztes Polybutadienöl, zur Isomerisierung verwendet. Es wurden auf einen Einsatz von 2,74 g Mg 300 g des in Beispiel 1 eingesetzten Öls verwendet. Dazu wurden 30 ml HMPT gegeben, wobei die Mischung sich unter Aufschäumen trübte. Dann wurde zunächst auf 120°C aufgeheizt, nach 1 Stunde bei 120°C wurde die Temperatur auf 150°C eingestellt, wo sie weitere 3 Stunden gehalten wurde. Bei 150°C trat ein Farbwechsel von hellgrau nach rotschwarz ein. Die Ergebnisse bezüglich des Konjuengehaltes zeigt Tabelle 4.

Tabelle 4

| Zeit | T | Konjuengehalt [%] | | |
|---|---|---|---|---|
| [Min] | [°C] | Diolef. | Triolef. | Tetraolef. |
| 30 | 120 | 0.69 | 0 | 0 |
| 60 | 120 | 0.78 | 0 | 0 |
| 120 | 150 | 11.7 | 0.09 | 0 |
| 210 | 150 | 13.1 | 0.11 | 0 |
| 300 | 150 | 12.6 | 0.12 | 0.04 |

## Beispiele 6 bis 12

Die Arbeitsweise von Beispiel 1 wurde wiederholt mit der Abänderung, daß Öle unterschiedlichen Molekulargewichts, unterschiedlicher Struktur und verschiedener Monomerer sowie Copolymere des Butadiens isomerisiert wurden. Die Ergebnisse enthält Tabelle 5.

# 0 020 924

Tabelle 5

Unterschiedliche zu isomerisierende Öle

| Beisp. Nr. | Öltyp* | Li/Kette | HMPT/Li | t [h] | T [°C] | konj. Diolef. [%] |
|---|---|---|---|---|---|---|
| 6 | VPO | 0.1 | 6.25 | 0.5 | 120 | 12.3 |
| 7 | VPO | 0.1 | 6.25 | 5 | 80 | 10.8 |
| 8 | PO 160 | 0.1 | 6.25 | 3 | 80 | 6.6 |
| 9 | PO 130 | 0.1 | 6.25 | 5 | 80 | 20.7 |
| 10 | Lit 1 | 0.1 | 6.25 | 5 | 80 | 3.6 |
| 11 | St/Bu | 0.1 | 6.25 | 3 | 80 | 7.8 |
| 12 | PIP | 0.1 | 6.25 | 3 | 120 | 4.9 |

| * Öltypen | $\overline{M}_n$ | Mikrostruktur [%] | | | Styrol-Geh. [%] |
|---|---|---|---|---|---|
| | | trans-1.4 | 1.2 | cis-1.4 | |
| Vinylpolyöl VPO | 930 | 12 | 42 | 46 | – |
| Polyöl 160 PO 160 | 6000 | 8–16 | 2–4 | 80–90 | – |
| Polyöl 130 PO 130 | 3000 | 19 | 1 | 80 | – |
| LITHENE⁺ AL Lit 1 | 860 | 10–20 | 40–50 | 5–10 | – |
| Styrol/Butadienöl St/Bu | 960 | 12 | 5 | 54 | 29 |
| Polyisoprenöl PIP | 1600 | 51% 3.4 | 3% 1.2 | 41% 1.4 | – |

Bei LITHENE AL werden noch 30 bis 40% alicyclische Strukturen angegeben, die von der Polymerisation herrühren. Vinylpolyöl wurde nach der DE-OS 2 361 782 hergestellt. Polyöl 130 und 160 sind Handelsprodukte der Chemischen Werke Hüls AG. LITHENE-Öle sind Polybutadiene, die mit Li-Katalysatorsystemen hergestellt werden. Styrol-Butadien-Öl wurde mit Ziegler-Katalysatoren auf Ni-Basis hergestellt (DE-PS 1 212 302). Polyisoprenöl wurde mit LiBu hergestellt. Alle Öle hatten als Ausgangsprodukte < 0,5% konjugierte Dienstrukturen. Tri- und Tetraolefine waren auch hier nach den Isomerisierungen in geringem Maße vorhanden.

## Beispiele 13 bis 15

Die Arbeitsweise von Beispiel 1 wurde mit anderen Verhältnissen Li/Kette wiederholt. Die einzustellenden Bedingungen für ein Polymeröl (Zeit, Temperatur) richten sich nach dem Katalysatoreinsatz in der Weise, daß, je höher der Katalysatoreinsatz ist, Temperatur und Zeit verringert werden müssen, da sonst Vergelung eintritt. Gleichermaßen müssen die Bedingungen für andere Öle als Butadienöle und von cis-1,4-reichen Ölen abweichende geändert werden.

Tabelle 6

| Beispiel-Nr. | Li/Kette | HMPT/Li | T [°C] | konj. Diole-fine [%] |
|---|---|---|---|---|
| 13 | 0.03 | 6.25 | 80 | 6.0 |
| 14 | 0.1 | 6.25 | 80 | 20.1 |
| 15 | 0.2 | 3.1 | 80 | 18.2 |

## Beispiel 16

Die Arbeitsweise von Beispiel 1 wurde in Cyclohexan als Lösungsmittel bei 80°C wiederholt. 100 g Polybutadienöl wurden in 187,5 ml Cyclohexan gelöst und mit 0,3 Li/Kette ($\overline{M}_n = 1500$) bei einem HMPT : Li-Molverhältnis von 3,1 : 1 isomerisiert. Der Konjuengehalt betrug nach 30 Min. 19% und nahm mit zunehmender Zeit (bis 5 Stunden) auf 7% ab.

Alle Produkte können durch wäßrige Wäsche mit niedrigen Alkaligehalten erhalten werden.

## Vergleichsbeispiel 1

Unter gleichen Bedingungen wie in Beispiel 1, wobei das LiBu weggelassen wurde, erreicht man trotz der Basizität des eingesetzten HMPT bei 120°C nur <0,5% konjugierte Diolefine.

## Beispiel 17

Als Isomerisierungskatalysator wurde das System NaH/HMPT verwendet. Dazu wurden in der üblichen Weise 0,5 NaH/Polybutadienkette bei einem HMPT : NaH-Molverhältnis von 2,5 : 1 eingesetzt. Nach 1 Stunde bei 125°C enthielt das Öl 19% konjugierte Dienstrukturen.

## Vergleichsbeispiel 2

200 g des in Beispiel 1 verwendeten Polybutadienöls wurden im ausgeheizten und mit Argon gespülten Rührkolben mit 6,67 ml einer 2 m LiBu-Lösung in Hexan und 23,75 ml Diethylenglykoldimethylether (Diglyme) versetzt und auf 80°C aufgeheizt. Nach 5 Stunden Reaktionszeit bei 80°C unter Rühren betrug der Konjuengehalt <0,5%.

## Vergleichsbeispiel 3

Der in Vergleichsbeispiel 1 beschriebene Versuch wurde mit Hexaglykol-di-n-butylether als Zusatz wiederholt. Dabei wurden selbst bei einem hohen Katalysatoreinsatz (0,5 Li/Kette Polymer) und dem Ether : Li-Molverhältnis von 2,5 : 1 nach 5 Stunden bei 80°C <0,5% konjugierte Diolefine erhalten.

## Vergleichsbeispiel 4

Es wurde wie in den vorangegangenen Vergleichsbeispielen, diesmal aber mit dem Katalysatorsystem $K_2CO_3$/18-crown-6 (Molverhältnis K : Ether = 1 : 1; 2,5 Gewichtsprozent $K_2CO_3$ bezogen auf Polybutadienöl; Reaktionstemperatur 150°C; Zeit 5 Stunden) gearbeitet. Das sich mit zunehmender Zeit dunkler färbende Öl enthielt nach 5 Stunden 0,57% konjugierte Diolefine.

## Patentansprüche

1. Verfahren zur Isomerisierung von isolierten zu konjugierten Doppelbindungen in Homo- und/oder Copolymeren von 1,3-Dienen mit Hilfe eines Katalysatorsystems bestehend aus

## 0 020 924

a)  einer alkali- und/oder erdalkalimetallorganischen Verbindung und/oder einem Alkalihydrid und
b)  einer Lewis-Base,

gegebenenfalls in Gegenwart eines Lösemittels, dadurch gekennzeichnet, daß man als Katalysatorkomponente b) Hexamethylphosphorsäuretriamid verwendet.

2. Verfahren nach Anspruch 1, dadurch gekennzeichnet, daß man die Isomerisierung bei Temperaturen von 0 bis +200° C durchführt.

3. Verfahren nach Anspruch 2, dadurch gekennzeichnet, daß man die Isomerisierung bei Temperaturen von +20 bis +100° C durchführt.


## Claims

1. A process for isomerising isolated double bonds to conjugated double bonds in a homopolymer and/or a copolymer of a 1,3-diene with the aid of a catalyst system consisting of

a)  an organometallic compound of an alkali metal or an alkaline earth metal and/or an alkali metal hydride and
b)  a Lewis base,

optionally in the presence of a solvent, characterised in that hexamethylphosphoric acid triamide is used as catalyst component b).

2. A process according to claim 1, characterised in that the isomerisation is carried out at a temperature of 0 to 200° C.

3. A process according to claim 2, characterised in that the isomerisation is carried out at a temperature of 20 to 100° C.


## Revendications

1. Procédé pour l'isomérisation de doubles liaisons isolées en doubles liaisons conjuguées dans des homopolymères et/ou copolymères de 1,3-diènes à l'aide d'un système de catalyseur comprenant:

a)  Un composé organo-métallique de métal alcalin et/ou alcalino-terreux et/ou un hydrure de métal alcalin et
b)  Une base de Lewis,

éventuellement en présence d'un solvant, caractérisé par le fait que comme constituant (b) de catalyseur, on utilise l'hexa-méthyltriamide d'acide phosphorique.

2. Procédé selon la revendication 1, caractérisé par le fait que l'on exécute l'isomérisation à des températures de zéro à +200° C.

3. Procédé selon la revendication 2, caractérisé par le fait que l'on exécute l'isomérisation à des températures de +20 à +100° C.